# EUROPEAN PATENT APPLICATION

(11) **EP 1 486 523 A1**
(43) Date of publication of application: **15.12.2004**
(21) Application number: 03012597.5
(22) Date of filing: 03.06.2003
(51) Int. Cl.: C08G 18/48, C08K 9/04

(54) **Antimicrobial polyurethane flexible foam**

(71) Applicant: Luisi & Clement GmbH, 42781 Haan (DE); METZELER SCHAUM GMBH, 87686 Memmingen (DE)
(72) Inventor: Luisi, Magdalena, 42781 Haan (DE); Hohenhorst, Manfred, 88430 Rot an der Rot (DE)
(74) Representative: Helbing, Jörg, Dr. Dipl.-Chem.

(57) **Abstract**

The present invention relates to a composite material comprising a microparticle support, which has metallic ions and non-metallic cations grafted thereto, a process for producing said composite material and its use.

## Description

The present invention relates to a primary polyurethane flexible foam comprising a specific antimicrobial composite material, a process for producing said foam and its use.

### Background of the Invention

The preparation of polyurethane (PUR) flexible foams with antibacterial, bactericidal and/or fungicidal activity - via addition of chemical additives, for example, arsenic-containing and/or Sn-organic products - is well known in the art. Such chemical additives are utilized in the process of foam production (e.g., according to the general method described in Kunststoffhandbuch VII, Becker/Braun, Polyurethane, Oertel, Carl-Hanser-Verlag). The handling of these additives is - due to their poisonous properties - cumbersome and bound to serve production restrictions. Thus, there was the need for a safe and highly efficient antimicrobial compound for use in polyurethane flexible foams.

The inventors of the present invention have described a composite material comprising a microparticle support having metallic ions and non-metallic cations grafted to the surface of the support (PCT/EP02/13362). The support is, among others, consisting essentially of polymeric inorganic particles. PCT/EP02/13362 emphasizes that the composite be utilized in a PUR foam, particularly mentioned, are secondary (rebonded) foams.

The mode of activity of the composite material of PCT/EP02/13362 differs significantly from that of the above-mentioned chemical additives. It is based on the presence of metal ions (e.g. Ag⁺, Cu²⁺ or Zn²⁺) which do have an impact on the preparation of primary PUR foams, but are of course not relevant for the preparation secondary (rebond) foams. It was now surprisingly found that the preparation of a polyurethane flexible foam containing a composite material as defined in PCT/EP02/13362 is in fact possible. Furthermore, it was found that the antibacterial activity of the composite material was conserved while being incorporated in the primary polyurethane flexible foam.

### Summary of the Invention

The present invention relates to
(1) a primary polyurethane flexible foam comprising a antibacterial composite material, said composite material comprising a microparticle support consisting essentially of polymeric inorganic particles and having metallic ions and non-metallic cations grafted to the surface of the support;
(2) a method for producing the polyurethane foam according to (1) above, which comprises
   (a) mixing the polyol component of the foam and the composite material, and subsequently
   (b) adding the isocyanate component and optionally other functional or non-functional components thereto; and
(3) a mattress or sanitary mat comprising the polyurethane flexible foam according to (1) above.

### Detailed Description of the Invention

In accordance with the present invention "grafting" refers to any kind of chemical interaction (e.g., covalent chemical bond, ionic interaction, non-ionic or hydrophobic interaction) between the particles and the metallic ions and non-metallic cations, respectively. With the inorganic particles "grafting" means in most cases - without being bound to any specific theory - salt formation between the negative charges on the surface of the particle and the metallic ions and the non-metallic cations. According to the invention "grafting" does not mean placing the salt of a cation with a low molecular, non-polymeric organic or inorganic compound in a matrix of adhesive, e.g. in order to fix the cation to a polymer.

The wording "consists essentially of" according to the invention means a content of greater than 90%, preferably greater than 95%, and most preferably greater than 99% by weight.

In a preferred embodiment of the invention the inorganic particle is a microporous silicate, such as zeolite, iolite, and diatomite. The microporous silicate has a large amount of micropores which can adsorb silver (resulting in a silver-zeolite complex), low-cost silver series substances (ions), such as copper ions or zinc ions, and the non-metallic cations, such as cationic dyes, through cationic interchange. The resulting composite has broad-spectrum, anti-bacterial and rot resistance effects without changing the basic properties of the support. It can be used on electrical home appliance plastics, plastic films, building coatings, ceramics, rubber items, etc.

The metallic ions are silver series ions including, but not limited to, silver ions (Ag⁺), copper ions (Cu²⁺) and zinc ions (Zn²⁺). The above ions may be used separately or as a mixture.

The non-metallic cation preferably is a nitrogen containing compound having a positive charge can be any antibacterial aliphatic or aromatic amines or ammonium compounds. Such cations include, but are not limited to, saturated or unsaturated protonated heterocycles capable of being protonated or having at least one positive charge (per se) containing at least one nitrogen atom, e.g. saturated heterocycles (such as pyrrolidine, imidazolidine, piperidine, piperazine, azepane, azepine, morpholine, DABCO (1,4-diazabicyclo[2.2.2]octane), etc.) and their derivatives (such as N-methylmorpholine, etc.), unsaturated heterocycles having at least one double bond or being heteroaromatic (such as DBN (1,5-diazabicylco[4.3.0]non-5-ene), DBU (1,8-diazabicyclo[5.4.0]undec-7-ene), imidazole, triazole, pyridine, bipyridine, pyrazine, pyrimidine, triazine, tetrazine, etc.) and their derivatives (such as substituted heterocycles (e.g. lutidine, collidine, etc.) or amino-substituted heterocycles (e.g. DMAP (4-N,N-dimethylaminopyridine), etc.), benzocondensed heteroaromatics (such as quinoline, isoquinoline, acridine, phenazine, etc.) and their derivatives, ammonium, mono-, di-, tri-alkyl-(or aryl-)amines (capable of being protonated) (such as butylamine, dibutylamine, trimethylamine, triethylamine, tripropylamine, tirbutylamine, N,N-diisopropylethylamine, benzyl-N,N-diethylamine, benzyl-N,N-dipropylamine, benzyl-N,N-dibutylamine, etc.), tetra-alkyl-(or aryl-)ammonium (such as tetraethylammonium, tetrapropylammonium, tetrabutylammonium, benzyl-N,N,N-triethylammonium, bezyl-N,N,N-tripropylammonium, benzyl-N,N,N-tributylammonium, dibenzyl-N,N-diethylammonium, etc.) and their derivatives, cationic dyes such as e.g. basic green, cationic brilliant blue, methine dyes, enamine dyes, styryl dyes, cyanine dyes, mono- and diazadimethine dyes, diphenylmethane and triphenylmethane dyes, xanthene dyes, azine dyes, azo dyes, anthraquinone dyes, phthalocyanine dyes, perinone dyes, naphthalimide dyes, quinophthalone dyes, neutrocyanine dyes, nitro dyes, etc. Particularly preferred non-metallic cations are the above-mentioned cationic dyes, in particular basic green, cationic brilliant blue, methane dyes and triptylmethane dyes, among which basic green and cationic brilliant blue are most preferred.

The composite of embodiment (1) of the invention has antibacterial properties, is mold-resistant and is in solid form and generally in a powder form. The preferred powder size is 200 to 50 mesh. The color of the composite appears different depending on the dyes added during the manufacturing process. The color can be green, yellow, blue, black, red, etc.

The "microparticle support" according to the invention is a powder having a particle size of 500 to 10 mesh, preferably 200 to 50 mesh.

It is believed that the composite of embodiment (1) has an anti-bacterial function through incorporating micro-size, micro particle support of poly-microporous, non-metallic mineral (silicate) with copper or zinc ion and cationic dyes. The composite can have long-term, broad-spectrum, anti-bacterial and mold-resistant effect. The composite can be used to make anti-bacterial and mold-resistant plastics, ceramics, building coatings, rubber items, etc. It can also be used in textiles. It has a good anti-bacterial effect and broad effective spectrum. The material is non-toxic, easy to make and easy to maneuver.

One preferred embodiment of the invention is to choose silver-series substance, such as copper and zinc adsorb the silver series substance to the micro-sized support which can bind organic anti-bacterial groups, and graft organic anti-bacterial groups to the support to have a good anti-bacterial and mold-resistance effect.

For the composite material according to the invention to have antibacterial properties and to be mold-resistent it is essential that the content of the non-metallic cation is not too small, i.e. the non-metallic cation is present neither in trace amounts nor as an impurity (e.g. resulting from the manufacture of the microparticle support). According to the invention a trace amount or impurity of non-metallic cation is defined as a content of non-metallic cation being less than 0.1% by weight of the composite material and/or is defined as the non-metallic cations being present in the composite material or the microparticle support in a weight percentage ratio of non-metallic cations: metallic ions being smaller than 1.0 : 20.0 (i.e. the content of non-metallic cations is less than 5% by weight of the content of metallic ions).

Therefore, the content of the non-metallic cation according to the invention is defined as follows: The non-metallic cations are present in the composite material or the microparticle support in a weight percentage ratio of non-metallic cations : metallic cations not being smaller than 1.0 : 20.0 and/or the context of non-metallic cations is not less than 5% by weight of the content of metallic ions.

In a preferred embodiment of the invention, the weight percentage ratios among copper ion, zinc ion, porous silicate and cationic dyes are as follows: copper and zinc ions : microparticle support (e.g. porous silicate) : cationic dyes are (20~40) : (1.0~2.0) : (0.1~0.3).

The composite of embodiment (1) can be prepared by a method as disclosed in PCT/EP02/13362 which includes grafting the metallic ion and/or the non-metallic cation to the support. In particular, the process is as follows:
1) Preparation of a proper amount of copper or zinc salt in a ratio indicated previously;
2) Addition of 20 to 40 ml of ammoniacal liquor (concentration 26-27%) at room temperature and mixing with the salt to obtain a liquid mixture with a concentration of 1 g in 1000 to 1500 ml water;
3) Stirring the mixture for 30 to 60 minutes and putting it aside for further use;
4) Selecting a proper amount of silicate (diatomite or iolite, the particle size corresponding to a mesh value of ≥ 80 mesh) at the ratio indicated previously;
5) Heating the silicate at 90°C to 100°C for 2 to 3 hours;
6) Adding the heated silicate to the mixture and stirring for 2 hours to obtain a reaction mixture;
7) Adding cationic dyes to the reaction mixture at the ratio indicated previously and stirring the cationic mixture for 30 to 60 minutes at 80°C to 90°C; and
8) Incubating the cationic mixture at 85 ± 2°C for 30 to 60 minutes, then filtering, washing, and baking the cationic mixture to obtain the composite as a powder.

In a preferred embodiment of the above process, during the production of the composite, a Cationic Brilliant Blue Dye is added as an additive.

The composite according to the invention is non-toxic environmental-safe material. There are no special storage and disposal requirements for the composite. The end products of the composite may require different handling based on the different materials that the composite is mixed with. In most cases, said materials are all EPA or FDA registered materials and the mixing procedures comply with EPA regulations.

The composite has good anti-bacterial effect, and a broad anti-bacterial spectrum. The composite has a prominent killing effect on pathogenic bacteria and fungi, e.g. *pyrogenic cocci* (Streptococcus such as *Streptococcus pyrogenes, Streptococcus pneumoniae, and β-hemolysing Streptococcus, Staphylococcus aureus, Meningococcus, Neisseria gonorrhoea* and the like), *Enterobacteriaceae* (such as *Escherichia Coli, Schmitz's bacillus, Salmonella typhi, Salmonella paratyphi, Salmonella typhimurium, Salmonella enteritidis, Bacterium cholerae suis, Morgan's bacillus, Bacillus pneumonia, Pseudomonas aeruginosa* and the like), *Pathogenic fungi* (such as *Candida albicans, Crytococcus neoformans, Trichophyton rubrum, Trichophyton rosaceum, Microsporum gypseum, thread fungus* and the like), etc.

The polyurethane foam of the invention comprises - besides the composite material as defined above - a flexible polyurethane foam. Such polyurethane foam is generally obtainable by an organic polyisocyanate compound with a polyether or polyester polyol in the presence of optional functional or non-functional compounds such as a foaming agent, a catalyst, a surfactant, a crosslinking agent and other additives, fillers and the like.

Suitable polyether polyols are well known in the art and include polyoxyalkylene polyols (such as polyethylenoxide, polypropylenoxide etc.) as well as polyols based on other di-, tri-, tetra-hydroxy alkylene monomers and combinations and mixtures thereof. Ones having a viscosity less than or equal to 3,000 cps, preferably less than 2,000 cps, and/or ones having an OH-value greater than 10 (mg KOH per g polyol), preferably greater than 25, and/or ones having an average M.W. of below 10,000 g/mol, preferably below 5,000 g/mol are particularly preferred.

Polyester polyols used in the invention can be prepared by esterification of an aliphatic polyhydric alcohol or a mixture thereof with an aliphatic polybasic acid or a mixture thereof. These monomers can also include a hydroxycarboxylic acid or a mixture thereof, or an oligomer or these raw materials. Aliphatic polyester can be obtained by conducting a direct polycondensation reaction in a reaction mixture containing an organic solvent.

The polymerization degree of aliphatic polyester is between 100 and 20,000. The polymerization degree lower than 100 results in a low strength of formed products and is not adapted to practical use. On the other hand, when the polymerization degree is too high, melt viscosity rises up and reduces melt processing ability.

The direct polycondensation reaction is carried out in an organic solvent by heating a mixture of a polyhydric alcohol and a polybasic acid or additionally a hydroxycarboxylic acid, while distilling out generated water and excess monomer together with the organic solvent from the reaction system and charging to the reaction system an additional organic solvent containing an amount of water and monomer not more than that dissolved in the distilled organic solvent.

Polyhydric alcohols of the invention have aliphatic hydroxyl groups and include, for example, ethylene glycol, diethylene glycol, triethylene glycol, polyethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, polytetramethylene glycol, 1,4-cyclohexanedimethanol and 1,4-benzenedimethanol.

Exemplary polybasic acids of the invention have aliphatic carboxyl groups and include succinic acid, oxalic acid, malon ic acid, glutaric acid, adipic acid, pimelic acid, subelic acid, azelaic acid, sebacic acid, undecane diacid, dodecane diacid, 1,4-phenylenediacetic acid and phenylsuccinic acid. Anhydrides of these polybasic acids can also be used.

Representative hydroxycarboxylic acids which can be used include lactic acid, glycolic acid, 3-hydroxybutyric acid, 4-hydroxybutyric acid, 3-hydroxyvaleric acid, 5-hydroxyvaleric acid and 6-hydroxycaproic acid. When these raw materials have an asymmetric carbon atoms in the molecule, individual D-, L-, DL-isomer and a mixture thereof can be used.

The organic polyisocyanates include 2,4-tolylene diisocyanate, 2,6-tolylene diisocyanate, mixtures of these isocyanates at weight ratios of 80/20 (80/20-TDI) and of 65/35 (65/35-TDI), crude tolylene diisocyanate(crude TDI), 4,4'-diphenylmethane diisocyanate (4,4'-MDI), 2,4'-diphenylmethane diisocyanate (2,4'-MDI), 2,2'-diphenylmethane diisocyanate (2,2'-MDI), mixtures of diphenylmethane diisocyanate isomers (MDI), polymethylene polyphenyl isocyanate (crude MDI), toluidine diisocyanate, xylylene diisocyanate, hexamethylene diisocyanate, isophorone diisocyanate, dicyclohexylmethane diisocyanate, and carbodiimido-modified products thereof, biuret modified products, dimers, trimers and prepolymers thereof. They may be used alone or in combination.

The foaming agents include water, trichloromonofluoromethane, dichlorodifluoromethane, 2,2-dichloro-1,1,1-trifluoroethane, 1,1-dichloro-1-fluoroethane, methylene chloride, trichlorotrifluoroethane, dibromotetrafluoroethane, trichloroethane, pentane, n-hexane and so on. They are used alone or in combination. Using water alone is preferred from the point of environment protection. The amount is in the range of from 0.01 to 10 parts by weight per 100 parts by weight of polyoxyalkylene polyol.

The catalysts for urethane reaction are well-known ones and not limited in particular. The amine catalysts include triethylamine, tripropylamine, polyisopropanolamine, tributylamine, trioctylamine, hexamethyldimethylamine, N-methylmorpholine, N-ethylmorpholine, N-octadecylmorpholine, monoethanolamine, diethanolamine, triethanolamine, N-methyldiethanolamine, N,N-dimethylethanolamine, diethylenetriamine, N,N,N',N'-tetramethylethylenediamine, N,N,N ',N'-tetramethylpropylenediamine, N,N,N',N'-tetramethylbutanediamine, N,N,N',N'-tetramethyl-1,3-butanediamine, N,N,N',N'-tetramethylhexamethylenediamine, bis[2-(N,N-dimethylamino)ethyl]ether, N,N-dimethylbenzylamine, N,N-dimethylcyclohexylamine, N,N,N',N'-pentamethyldiethylenetriamine, triethylenediamine, formate and other salts of triethylenediamine, oxyalkylene adducts of amino groups such as primary and secondary amines, aza cyclic compounds such as N,N-dialkylpiperazines, various N,N',N"-trialkylaminoalkylhexahydrotriazines, .beta.-aminocarbonyl catalysts disclosed in JP-B-52-043517 (Tokkosho) and .beta.-aminonitrile catalysts disclosed in JP-B-53-014278 (Tokkosho). Organometallic catalysts include tin acetate, tin octylate, tin oleate, tin laurate, dibutyl tin diacetate, dibutyl tin dilaurate, dibutyl tin dichloride, lead octanoate, lead naphthenate, nickel naphthenate and cobalt naphthenate. They may be used alone or in combination. The amount is in the range of from 0.0001 to 10.0 parts by weight per 100 parts by weight of compounds having active hydrogen atoms.

The surfactants are well-known organosilicon surface active agents. They include L-520, L-532, L-540, L-544, L-550, L-3550, L-5305, L-3600, L-3601, L-5305, L-5307, L-5309, L-5710, L-5720, L-5740M and L-6202 of Nippon Unicar Co., Ltd., SH-190, SH-194, SH-200, SPX-253, PX-274C, SF-2961, SF-2962, SPX-280X and SPX-294A of Toray Silicone Co., Ltd., F-114, F-121, F-122, F-220, F-230, F-258, F260B, F-317, F-341, F-601, F-606, X-20-200 and X-20-201 of Shinetsu Silicone Co., Ltd., TFA-4200 and TFA-4202 of Toshiba Silicone Co., Ltd., B-4900, B-4113 B-3002 and B-2370 of Goldschmidt Co., Ltd, SRX-253, SRX-274C, SF-2961 and SF-2962 of Toray-Dow Cohning Co. The amount thereof is in the range of from 0.1 to 10 parts by weight, preferably from 0.1 to 5 parts by weight, per 100 parts by weight of the total weight of a compound which has active hydrogen atoms and a polyisocyanate.

The crosslinking agents include monomeric polyols such as ethylene glycol, propylene glycol, diethylene glycol, triethylene glycol and 1,3-butanediol, alkanolamines such as triethanolamine and diethanolamine, aliphatic polyamines such as ethylenediamine, diethylenetriamine and triethylenetetramine, aromatic polyamines such as methyleneorthochloroamine, 4,4'-diphenylmethanediamine, aniline, 2,4'-tolylenediamine and 2,6'-tolylenediamine, and compounds obtained by adding, to these active hydrogen compounds, ethylene oxide and propylene oxide to have a hydroxyl value greater than or equal to 200 mg KOH/g. Other compounds having a hydroxyl value greater than or equal to 200 mg KOH/g obtained by adding ethylene oxide and propylene oxide to hydroquinone, resorcin and aniline, may also be used. They are used in the range of 0.1 to 10 parts by weight per 100 parts by weight of polyoxyalkylene polyol.

Stabilizers, fillers, coloring materials and flame retardants may be used in addition to the above-mentioned materials if necessary.

The process for preparing a polyurethane foam is described below. Predetermined amounts of composite material, polyol, foaming agent, catalyst, surfactant, crosslinking agent and other additives are mixed in predetermined amounts to obtain a resinous premixture. The amounts of the organic polyisocyanate compound, polyoxyalkylne polyol and cross linking agent are so determined that the ratio by equivalent weight (NCO/H) of the NCO group in the polyisocyanate compound to the active hydrogen atom in the resinous premixture is in the range of from 0.7 to 1.4. The resinous premixture and the polyisocyanate compound are adjusted at a predetermined temperature, for example, of from 20 to 25 °C, followed by quick mixing and casting into a mold (or into any other type of forms, including paper models and the like) which has an adjusted temperature, for example, of from 30 to 70 °C. The reaction mixture is foamed, filled in the mold and cured in an oven whose predetermined temperature is, for example, in the range of from room temperature to 150 °C for a predetermined time, for example, of from 5 to 30 minutes, and the foam is demolded to obtain a flexible polyurethane foam. Alternatively, the process can also be adapted to a continuous block foam production process.

The PUR foams obtained possess excellent antibacterial activity and can be used in hospital and sanitary applications. In particular, they are applicable as sanitary sponges, cosmetic sponges, powder sponges, application sponges, vaginal tampons, filling material for puppets, toys, cushions, etc., mattresses, filling material for pillows, counterpanes, coverlets, pads, quilts, etc., medical pads, arch supports for medical foot care, molded parts for medical foot care, wound dressing, medical foams, and the like.

The process technology for the preparation of particle foams has reached a high level of development. Therefore, in principle the scope for varying the raw materials which can be employed is very large.

In addition, the PUR foams of the invention can be utilized as starting material for foam scraps which can be used together with other PUR flexible foam scraps, textile scraps, scraps from compact plastics, microcellular polyurethanes and thermoplastic foams for making rebonded foams.

The followings examples illustrate the present invention, however, they are not to be construed as limiting the invention:

### Examples

The chemicals listed below were purchased from Weifang No. 3 Industrial chemicals, Shanghai Pudong Chemical and Material Supply and from Guangxi Province Nanning Mineral Products. The iolite and diatomite was purchased from Hongqin Aotu (mineral stone) Company, Ltd., Jiang Su Province, China. The composite material is prepared according to PCT/EP02/13362, which is herewith incorporated by reference in its entirety.

### Comparative Example 1: Iolite as support

Copper sulfate (0.2 g) was dissolved in water (500 ml). Ammoniacal liquor (26 to 28%; 6 ml) was added, and the mixture obtained was stirred for 30 minutes to give a blue copper liquor. Iolite (90 mesh; 10 g) was baked at 100°C for 2 hours before it was added to the copper liquor to furnish a reaction mixture. The reaction mixture was stirred for 2 hours. Then Cationic Brilliant Blue (0.001 g) was added to the reaction mixture, which was stirred until the temperature reached 80°C to 90°C. The mixture was kept at 85 ± 2°C for 30 minutes, then filtered, washed and baked to obtain a bluish green powder.

### Comparative Example 2: Iolite as support

Zinc sulfate (0.26 g) was dissolved in water (800 ml). Ammoniacal liquor (26 to 28%; 6 ml) was added, and the mixture obtained was stirred for 30 minutes. Iolite (800 mesh; 20 g) was baked at 100°C for 2 hours before it was added to the preceding solution. The mixture obtained was stirred for 2 hours to give a reaction mixture. Cationic Brilliant Blue (0.0016 g) was added to the reaction mixture, which was stirred until the temperature reached 80°C to 90°C. The mixture was kept at 85 ± 2°C for 30 minutes, filtered, washed and baked to furnish a bluish green powder.

### Comparative Example 3: Diatomite as support

Zinc sulfate (0.2 g) was dissolved in water (600 ml). Ammoniacal liquor (26 to 28%; 8 ml) was added, and the mixture obtained stirred for 30 seconds. Diatomite (90 mesh; 25 g) was baked at 100°C for 2 hours before it was added to the mixture, which was stirred for 2 hours to give a reaction mixture. Cationic Brilliant Blue (0.0015 g) was added to the reaction mixture, which was stirred until the temperature reached 80°C to 90°C. The reaction mixture was kept at 85 ± 2°C for 30 minutes, filtered, washed and baked to obtain a bluish green powder.

### Comparative Example 4: Diatomite as Support

Zinc sulfate (0.3 g) was dissolved in water (500 ml). Ammoniacal liquor (26 to 28%; 8 ml) was added, and the mixture obtained stirred for 30 minutes to give a blue copper liquor. Diatomite (120 mesh; 20 g) was baked at 100°C for 2 hours before it was added to the mixture, which was stirred for 2 hours to furnish a reaction mixture. Cationic Brilliant Blue (0.0015 g) was added to the reaction mixture, which was stirred until the temperature reached 80°C to 90°C. The mixture was kept at 85 ± 2°C for 30 minutes, filtered, washed and baked to obtain a bluish green powder.

### Comparative Example 5: Large Scale with Iolite as Support

### 1. Preparation:

The raw material came in containers of different size each time. A sample was taken from each raw material of each order. The content of copper sulfate (grade II or higher), iolite (powder, industrial grade) and basic green dye (powder, industrial grade) was determined. Each sample was divided into two packages.

One package was stored for future reference, the other package was tested according to the respective manufacturer specification sheet. In case the specification was not met it was immediately reported to the supervisor. Two workers wearing gloves and a face mask weighted and packed each raw material as follows:

| | | |
|---|---|---|
| a. | Tap water | 100 liter ± 10% (one container) |
| b. | Iolite powder | 100 kg ± 10% (one container) |
| c. | Copper sulfate | 10 kg ± 1% (one container) |
| d. | Sodium hydrogensulfate | 5 kg ± 5% (one container) |
| e. | Basic green dye | 4 g ± 1% (one container). |

All containers had to be sealed for purity and to be cleaned if not being used for more than one day or being used for more than one week. All containers had to be labelled and marked. The QC sheet had to be signed for each preparation.

### 2. First baking:

All working conditions had to be complied with; once the compound was mixed, it was not allowed to reuse it once it was over the indicated standby time.

Iolite (100 kg) was poured into a container (container A), mixing was started, and water (1 l at a time) was added up to a total of 100 l. The mixture obtained was stirred at room temperature (10 to 25°C) for 30 to 40 min. Any bulky deposit at the bottom of the mixture had to be avoided.

A forklift was used to place the container (container A) into an oven (oven A). The oven temperature was set to 50°C and observed. The mixture was stirred at 30 rpm.

### 3. Second baking:

Once the mixture A in oven A reached 45-55°C, the forklift was used to remove container A from oven A. Copper sulfate (10 kg) was poured into mixture A. The mixture obtained was called mixture B. Container A was put back into oven A.

The temperature was set to 60°C and observed. When a temperature of 60°C was reached, the time was set to 30 minutes. The temperature was kept at 60°C for 30 min. Mixture B was stirred at 20 rpm.

### 4. Third baking:

Once mixture B in oven A was baked for 30 minutes, the forklift was used to remove container A from oven A. Sodium hydrogensulfate (5 kg) was poured into container A and the mixture obtained was called mixture C. Mixture C was not dry as powder at this time. Container A was put back into oven A.

The temperature was set to 70°C and observed; when this temperature was reached, the time was set to 30 min. The temperature was kept at 70°C for 30 min. Stirring was kept at 10 rpm.

### 5. Fourth baking:

Once the mixture C in oven A had been baked for 30 min, the forklift was used to remove container A from oven A. Basic green dye powder (4 g) was poured evenly into container A, and the mixture obtained was called mixture D. Mixture D was dry as powder at this stage. Container A was put into another oven (oven B). Oven A was ready immediately for use for the next batch.

The temperature was set to 80°C and mixture D was stirred for 30 min at 5 rpm.

### 6. Final baking:

Once mixture D in oven B had been baked for 30 min, the temperature of oven B was set to 95°C.

The temperature was kept at 95°C and mixture D was stirred for another 30 min at 5 rpm.

### 7. Filtering:

The fork lift was used to remove container A from oven B. Oven B needed to be cooled to below 80°C before the next run. By now the mixture in container A had an even looking color and was called compound E. Compound E was allowed to cool down until it was safe to handle.

The fork lift was used to lift container A to the conveyor line entrance. One or two workers loaded compound E onto the conveyor line channel. Compound E cooled to room temperature whilst on the conveyor line and before entering the filter. More than one filter was used in order to speed up the process. The final filter was selected according to the mesh size requirement (currently mesh 200 is required). The worker had to wear a face mask during filtering. The filtered compound was a powder called powder F.

### 8. Wash and dry:

Powder F will travel into a contained section of convey line. One worker with mask and gloves will flat powder F on the bottom of the convey line. Use steam water to wash away any foreign particles and dust off the powder F. Once powder F was washed, it was stored into a shallow container (container B) for air dry. A filter mesh (200) is recommended as the cover of container B. Several container Bs will take one load of container A.

### 9. Packaging:

After packaging the air dried powder F was called end product G (GCM powder), from which a sample was taken. Then end product G was filled into fiber bags, which were sealed and placed in metal barrels. Once the antibacterial report showed OK, the barrels were sealed. Each barrel contained net 30 kg GCM.

### 10. Antibacterial test on end products of GCM:

For each batch (about 10 metric ton of GCM), at least two samples had to be taken to the testing room, one at the beginning of the batch and one at the end.

The AATCC 1971 or 1981 method was used to test the samples. If the samples did not show an antibacterial halo (method 1971) or at least 90% antibacterial rate of 1981, the GCM of the related batch was discarded.

### Example 1: Preparation of a PUR flexible foam with composite material

1000 g of a Lupranol 2080 (Elastogran), a polyether polyol having a M.W. of 3500 g/mol and an OH value of 48 mg KOH per g polyol is admixed with 5 g composite material according to comparative example 5. Subsequently, 2 g dimethylethylamine, 3 g urea, 10 g foam surfactant B4900 (Th. Goldschmidt/Degussa) and 23 g H₂O are added under stirring and are homogenized. Moreover, 1.2 g tin(II)octaate are added under stirring. Thereafter 3.418 g T80 toluene diisocyanate (80/20TDI) are added under stirring and are intensively stirred. The resulting foam mixture is given into a mold wherein the foam is developing. The mold with the foam is heated ("baked") at 140 °C for 0.5 to 2 h. A flexible foam with a low density of 37 kg/cm³ and a compression hardness of 2,5 kPa is obtained. The resulting PUR flexible foam had an excellent antimicrobial activity.

## Claims

1. A primary polyurethane flexible foam comprising a antibacterial composite material, said composite material comprising a microparticle support consisting essentially of polymeric inorganic particles and having metallic ions and non-metallic cations grafted to the surface of the support.

2. The polyurethane foam of claim 1, where in the composite material
(i) the inorganic particles are a porous silicate, more preferably an iolite or a diatomite;
(ii) the metallic ion is a silver-series ion, preferably is selected from copper, zinc and silver, and/or
(iii) the non-metallic ion is a nitrogen containing compound having at least one positive charge, preferably is a cationic dye and most preferably is selected from Basic Green and Cationic Brilliant Blue; and/or
(iv) the weight percentage ratio of non-metallic cation : metallic ion is not smaller than 1.0 : 20.0; and/or.
(v) the weight percentage ratio of the microparticle support : metallic ions : non metallic cations is (20 to 40) : (1.0 to 2.0) : (0.1 to 0.3)

3. The polyurethane foam of claim 2, wherein the metallic ion is a copper ion or a zinc ion attached to the surface of a microporous silicate.

4. The polyurethane foam according to any one of claims 1 to 3, wherein the composite material has a particle diameter of 74 to 297 µm (200 to 50 mesh).

5. The polyurethane foam according to any one of claims 1 to 4, wherein the polyurethane is a soft foam PUR on polyetherpolyol or polyesterpolyol basis, preferably
(i) the polyols have a OH-value above 10; and/or
(ii) the polyols are polyether polyols; preferably having
(iii) the isocyanate is selected from toluylendiisocyanate, diphenylmethane, diisocyanate, mixtures of diphenylmethane diisocyanate isomers, polymethylene polyphenyl isocyanate, toluidine diisocyanate, xylylene diisocyanate, hexamethylene diisocyanate, isophorone diisocyanate, dicyclohexylmethane diisocyanate, and carbodiimido-modified products thereof, biuret modified products, dimers, trimers and prepolymers thereof.

6. The polyurethane foam according to claim 5, wherein the polyol is a polyetherpolyol having a M.W. of 3,500 and acid number of about 18, the isocyanate is an 80/20 mixture of 2,4-and 2,6-toluene diisocyanate.

7. The polyurethane foam according to any one of claims 1 to 6, which contains the composite material in an amount of 0.001 to 5 % by weight, preferably 0.01 to 1.5 % by weight based on the polyol component of the foam.

8. A method for producing the polyurethane foam according to any one of claims 1 to 7, which comprises
(a) mixing the polyol component of the foam and the composite material, and subsequently
(b) adding the isocyanate component thereto.

9. The method of claim 8, which further comprises the steps of
(c) pouring the foam obtained in step (b) into a mould, form or the like.

10. A mattress or sanitary mat comprising the polyurethane flexible foam according to any one of claims 1 to 7.
